Europäisches Patentamt

(19) European Patent Office

Office européen des brevets

(11) EP 0 902 333 A2

(12) **EUROPEAN PATENT APPLICATION**

(43) Date of publication:
17.03.1999 Bulletin 1999/11

(51) Int. Cl.⁶: $G03G\ 15/00$

(21) Application number: 98116986.5

(22) Date of filing: 08.09.1998

(84) Designated Contracting States:
AT BE CH CY DE DK ES FI FR GB GR IE IT LI LU
MC NL PT SE
Designated Extension States:
AL LT LV MK RO SI

(30) Priority: 09.09.1997 JP 244396/97

(72) Inventors:
• Hattori, Akiyoshi
  Yahata-shi, Kyoto 614-8376 (JP)
• Hasegawa, Shinya
  Uji-shi, Kyoto 611-0021 (JP)
• Yoshiiike, Nobuyuki
  Ikoma-shi, Nara 630-0134 (JP)

(71) Applicant:
Matsushita Electric Industrial Co., Ltd.
Kadoma-shi, Osaka 571-8501 (JP)

(74) Representative:
Grünecker, Kinkeldey,
Stockmair & Schwanhäusser
Anwaltssozietät
Maximilianstrasse 58
80538 München (DE)

(54) **Sheet having antistatic function and manufacturing method therefor**

(57) A sheet enhanced in antistatic function has, on a substrate:

two layers of thin tin-doped indium oxide films to which tin is doped in different amounts;
two layers of thin antimony-doped tin oxide films to which antimony is doped in different amounts; or
two layers of thin aluminium-doped zinc oxide films to which aluminium is doped in different amounts wherein tin, antimony or aluminium is doped in a larger amount in an upper (surface) layer of said thin tin-doped indium oxide films, said thin antimony-doped tin oxide films or said thin aluminium-doped zinc oxide films than in a lower layer.

Fig. 1

2 Lower layer of thin tin-doped indium oxide film
3 Upper layer of thin tin-doped indium oxide film
4 Protective film
1 Substrate

**Description**

BACKGROUND OF THE INVENTION

1.Field of the Invention

The present invention relates to a sheet enhanced in antistatic function to prevent electrostatic adsorption due to static electricity, for example, a ceiling sheet for copying machines equipped with automatic original sheet feeder mechanisms, and a manufacturing method therefor.

2.Description of the Related Art

Electrostatic adsorption due to static electricity produced by mechanical friction between an original sheet and a ceiling glass sheet can be mentioned as a cause for jamming of the original sheet in a copying machine equipped with an automatic original sheet feeder mechanism. In order to prevent the jamming of the original sheet, it is therefore required to lower frictional resistance and electrical resistance of a surface of the ceiling glass sheet.
As a method to lower the frictional resistance and the electrical resistance, there is conventionally known a method to form two layers of films which consist of an upper lubricating layer made of an organic silicon compound and a lower transparent conductive layer made of tin oxide-antimony oxide (ATO), indium oxide-tin oxide (ITO) or the like on a ceiling glass sheet so that the upper lubricating layer lowers the frictional resistance and the lower transparent conductive layer lowers the electric resistance.
As a method to form the lubricating layer, there are available a method which uses an organic compound such as a compound containing polyfluoroalkyl groups or a higher amine compound having the number of carbon atoms of 10 or larger and another method which uses an organic silicon compound such as a compound of silicon combined with isocyanate groups or polydimethyl siloxane denatured at both ends.
Known as methods to form the transparent conductive film are (1) vacuum deposition method, (2) sputtering method, (3) CVD method, (4) pyrolysis method and so on.
Further, there is known a method to form an antistatic film having a fine structure in which transparent conductive particles are dispersed by coating a matrix of silicon oxide with a solution of silica zol in which transparent conductive particles such as ITO or ATO are dispersed and calcining the solution.
Since the method mentioned above as (1), (2) or (3) forms a single film by growing crystal particles from island-like structures, however, the film has a large particle size and low surface smoothness, thereby requiring polishing or forming a lubricating layer so as to obtain a two-layer antistatic film which has a small coefficient of friction.
On the other hand, the method mentioned as (4) has a potential to solve the problems posed by the methods mentioned as (1), (2) and (3), but is hardly capable of forming a film which is practically usable. When an organic solution of an inorganic compound such as indium nitrate, indium chloride or stannic chloride is used, for example, the method exhibits a defect that a formed film is turbid white or it is insufficient in mechanical strength and easily injured. Further, a method which uses an organic acid indium having strong ionic bonding property such as indium octylate has a defect that it allows a coating solution to be gelled since the organic acid indium is apt to be hydrolyzed and chemically denatured relatively easily.
Similarly, a method which forms an antistatic film having a fine structure in which transparent conductive particles are dispersed by coating a matrix of silicon oxide with a solution of silica zol containing dispersed transparent conductive particles and calcining the solution also poses problems in smoothness and strength of an obtained film though the method has a merit to allow a film to be formed through a single coating-calcining step.

SUMMARY OF THE INVENTION

In view of the problems which are posed by the conventional sheets enhanced in antistatic functions, the present invention has a primary object to provide a sheet enhanced in antistatic function which has a small coefficient of friction with no polishing treatment and a favorable antistatic function, and can be manufactured easily and at a low cost, and a manufacturing method therefor.
A sheet of claim 1 enhanced in antistatic function of the present invention comprises, on a substrate:

two layers of thin tin-doped indium oxide films to which tin is doped in different amounts;
two layers of thin antimony-doped tin oxide films to which antimony is doped in different amounts; or
two layers of thin aluminium-doped zinc oxide films to which aluminium is doped in different amounts.

A sheet of claim 2 enhanced in antistatic function of the present invention comprises, on a substrate:

2

a thin tin-doped indium oxide film having a gradient structure in which a tin doping ratio is gradient;

a thin antimony-doped tin oxide film having a gradient structure in which an antimony doping ratio is gradient; or

a thin aluminium-doped zinc oxide film having a gradient structure in which an aluminium doping ratio is gradient.

A sheet of claim 3 enhanced in antistatic function according to the present invention of claim 1 or 2, is that

said sheet comprises a thin film having a principal component of silicon oxide on said thin tin-doped indium oxide film, said thin antimony-doped tin oxide film or said thin aluminium-doped zinc oxide film.

A sheet of claim 4 enhanced in antistatic function according to claim 1, is that

tin, antimony or aluminium is doped in a larger amount in an upper (surface) layer of said thin tin-doped indium oxide films, said thin antimony-doped tin oxide films or said thin aluminium-doped zinc oxide films than in a lower layer.

A sheet of claim 5 enhanced in antistatic function according to claim 2, is that

tin, antimony or aluminium is doped at ratios progressively higher from inside toward a surface in said thin tin-doped indium oxide film, said thin antimony-doped tin oxide film or said thin aluminium-doped zinc oxide film.

A sheet of claim 6 enhanced in antistatic function according to any one of claims 1 through 5, is that

a total thickness of said thin film or films does not exceed 80 nm.

A sheet of claim 7 enhanced in antistatic function according to any one of claims 1 through 6, is that said substrate is made of glass.

A sheet of claim 8 enhanced in antistatic function according to any one of claims 1 through 7, is that

said sheet is used as a ceiling sheet for copying machines.

A manufacturing method of claim 9 for a sheet enhanced in antistatic function comprises

an antistatic film coating step to coat a substrate with an antistatic film forming composite which contains a volatile indium compound, a nonvolatile tin compound and an organic solvent,

an antistatic film drying step to dry said antistatic film forming composite after said antistatic film coating step; and

an antistatic film calcining step to form an antistatic film by calcining said antistatic film forming composite after said antistatic film drying step.

A manufacturing method of claim 10 for a sheet enhanced in antistatic function according to claim 9 comprises, after said antistatic film calcining step:

a step to form a protective film by coating a top surface of said antistatic film with an organic solution containing a condensate of an organic silicon compound which is derived from metal alkoxide, and drying and calcining said organic solution.

A manufacturing method of claim 11 for a sheet enhanced in antistatic function according to claim 9 or 10, is that said nonvolatile tin compound is tin oxalate.

A manufacturing method of claim 12 for a sheet enhanced in antistatic function according to any one of claims 9 through 11, is that said volatile indium compound is a reaction product between indium nitrate or indium chloride and an organic compound of $\beta$-diketone, a polyhydric alcohol or a condensate of a polyhydric alcohol.

Again we describe the main present inventions as follows.

The sheet enhanced in antistatic function according to the present invention is characterized in that it comprises two layers of thin tin-doped indium oxide films to which tin is doped in different amounts, or in particular, that it can have mechanical and chemical durabilities enhanced in the vicinity of a film surface by adding tin to an upper layer in an amount larger than that doped to a lower layer so that tin oxide which has thermal, mechanical and chemical durabilities higher than those of indium oxide is contained in a large amount in the vicinities of the film surface.

Further, an antistatic function, durabilities and transmittance favorable for use as a ceiling sheet of a copying machine can be obtained by configuring the two layers of thin tin-doped indium oxide films so as to have a thickness not exceeding 80 nm. Moreover, it is possible to further enhance mechanical and chemical durabilities of the film surface by forming a thin film which has a principal component of silicon oxide on the two layers of thin tin-doped indium oxide films.

The manufacturing method according to the present invention for a ceiling sheet for a copying machine forms on a substrate two layers of thin tin-doped indium oxide films to which tin is doped in different amounts through a step to coat a substrate with an antistatic film forming composite which consists of a volatile indium compound, a nonvolatile tin compound and an organic solvent, a step to dry the substrate and a step to calcine the substrate. Since a mixture of the volatile indium compound and the nonvolatile tin compound is produced due to vaporization of the organic solvent at the drying step, and a ratio of the nonvolatile tin compound is enhanced at the calcining step due to sublimation or vaporization of the volatile indium compound in a surface portion during temperature rise, the antistatic film forming composite consisting of a volatile indium compound, a nonvolatile tin compound and an organic solvent is capable of forming, as a result of pyrolysis of the volatile indium compound and the nonvolatile tin compound, two layers of thin tin-doped indium oxide films which are composed of particles having small particle sizes in fine structures and contain tin in an upper layer in an amount larger than that of tin in a lower layer.

Furthermore, it is possible to obtain a gradient structure of the doped substance by varying film thickness, heating temperature and sublimation of the doped substance.

BRIEF DESCRIPTION OF THE DRAWINGS

FIG. 1 is a sectional view illustrating a structure of an embodiment of the sheet enhanced in antistatic function according to the present invention.

FIG. 2 is a sectional view illustrating a structure of an embodiment of the sheet enhanced in antistatic function according to another present invention.

DETAILED DESCRIPTION OF THE PREFERRED EMBODIMENTS

Now, an embodiment of the present invention will be described below with reference to the accompanying drawing.

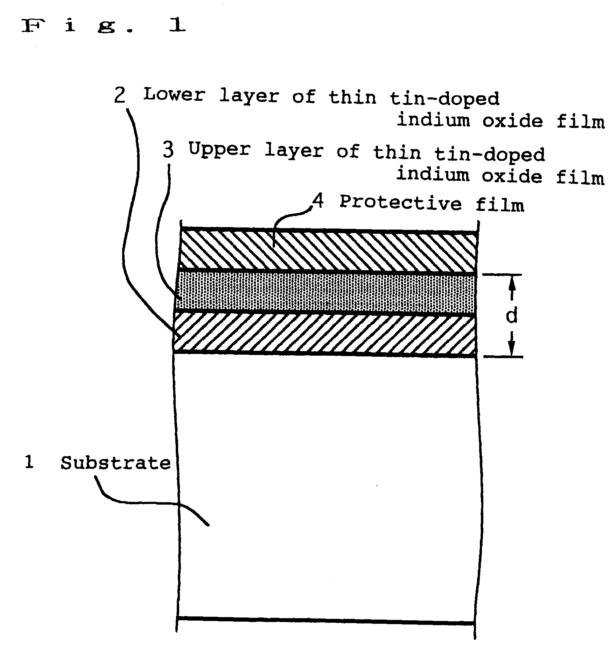

FIG. 1 is a sectional view illustrating a structure of an embodiment of the sheet enhanced in antistatic function according to the present invention. The sheet enhanced in antistatic function preferred as the embodiment is intended for use as a ceiling sheet for a copying machine.

In FIG. 1, a reference numeral 1 represents a substrate made of a transparent soda lime glass, formed on a top surface of which are two layers of thin tin-doped indium oxide films 2 and 3 containing tin doped in different amounts, and a protective film 4 which is a thin film having a principal component of silicon oxide. The upper layer of thin tin-doped indium oxide film 3 contains tin doped in an amount larger than that of tin doped to the lower thin tin-doped indium oxide film 2. Further, the two layers of thin tin-doped indium oxide films 2 and 3 have a total thickness d not exceeding 80 nm.

The sheet enhanced in antistatic function preferred as the embodiment of the present invention comprises the two layers of thin tin-doped indium oxide films 2 and 3, and tin is doped to the upper layer of thin tin-doped indium oxide film 3 in an amount larger than that of tin doped to the lower layer of thin tin-doped indium oxide film 2 to increase an amount of tin oxide which has thermal, mechanical and chemical durabilities higher than those of indium oxide in the vicinities of the film surface. Accordingly, mechanical and chemical durabilities of the film surface are enhanced. Further, the two layers of thin tin-doped indium oxide films 2 and 3 are configured to have a total thickness not exceeding 80 nm, thereby having an antistatic function and a durability favorable for use as a ceiling sheet of a copying machine. If these films have a film thickness exceeding 80 nm, transmittance for the visible rays will be 80% or lower, whereby the sheet enhanced in antistatic function will not be suited as a ceiling sheet of a copying machine. Furthermore, mechanical and chemical durabilities are further enhanced by forming a protective film 4 which is a thin film having a principal component of silicon oxide on the two layers of thin tin-doped indium oxide films 2 and 3.

Now, description will be made of an embodiment of the manufacturing method for the sheet enhanced in antistatic function according to the present invention.

First, a top surface of a substrate 1 which is made of transparent soda lime glass is coated with an antistatic film forming composite consisting of a volatile indium compound, a nonvolatile tin compound and an organic solvent. Then, the antistatic film forming composite coated over the substrate 1 is dried. Then, the antistatic film forming composite coated over the substrate 1 is calcined, thereby forming two layers of thin tin-doped indium oxide films 2 and 3 to which tin is doped in different amounts. Thereafter, an organic solution which contains a condensate of an organic silicon compound derived from metal alkoxide is coated over the two layers of thin tin-doped indium oxide films 2 and 3, dried and calcined, thereby forming a protective film 4.

The volatile indium compound may be any compound so far as it has a vapor pressure at a temperature below a level at which the antistatic film forming composite is thermally decomposed. A substance which can be mentioned as the volatile indium compound is, for example, a reaction product between indium nitrate or indium chloride and such an organic compound of a β-diketone such as acetylacetone, a polyhydric alcohol such as trimethylene glycol or glycerine, or a condensate of a polyhydric alcohol such as diethylene glycol or triethylene glycol. Further, the nonvolatile tin compound may be any compound so far as it is stable in air but easily decomposable by a heat treatment. A substance which can be mentioned as the nonvolatile tin compound is, for example, tin carboxylate or tin dicarboxylate, and it is preferable to use tin formate or tin acetate which has a small number of carbon atoms and most preferable to select tin oxalate. Furthermore, the organic solvent may be any organic solvent so far as it dissolves the organic compound and the inorganic compound mentioned above. A solvent which can be mentioned as the organic solvent is, for example, an alcohol such as ethanol or isopropanol, an ester acetate such as ethyl acetate or butyl acetate, a ketone such as acetone or diethyl ketone, or an ether alcohol such as methoxy ethanol or ethoxy ethanol. Moreover, it is preferable for applying the antistatic film forming composite to adopt the dip coating or the spin coating method though the screen printing method, roll coating method, dip coating method, spin coating method, etc. are usable. For the calcination, it is preferable to select a temperature not lower than a level at which the antistatic film forming composite is decomposed and not higher than a level at which the substrate is deformed, or preferably 300 to 500°C.

The organic solution containing the condensate of the organic silicon compound derived from the metal alkoxide which is used for forming the protective film is synthesized as described below. A metal alkoxide of silicon expressed by a chemical formula 1 is dissolved in an organic solvent:

$$Si(OR)_4 \hspace{4cm} \text{[FORMULA 1]}$$

The organic solvent may be any solvent so far as it dissolves the metal alkoxide mentioned above. A solvent which can be mentioned as the organic solvent is, for example, an alcohol such as ethanol or isopropanol, or an ether alcohol such as metoxy ethanol or ethoxy ethanol. An organic solution which contains a condensate of organic silicon compound is synthesized by partially hydrolyzing the metal alkoxide in an acidic condition. A condensate of organic silicon compound expressed by a chemical formula 2 has a one-dimensional structure and is suited to form a protective film which has high smoothness:

$$HO\text{-}Si(OR)_2\text{-}[O\text{-}Si(OR)_2]_n\text{-}Si(OR)_2\text{-}OH \hspace{3cm} \text{[Formula 2]}$$

To apply the organic solution which contains the condensate of organic silicon compound, it is preferable to adopt the dip coating method or the spin coating method though the screen printing method, roll coating method, dip coating method and spin coating method are usable. For the calcination, it is preferable to select a temperature not lower than a level at which the condensate of organic silicon compound is polycondensed and not higher than a level at which the substrate is deformed, preferably 80 to 500°C.

The manufacturing method for the sheet enhanced in antistatic function preferred as the embodiment of the present invention is capable of forming the two layers of thin tin-doped indium oxide films 2 and 3 which are composed of particles having small particle sizes in fine structures thereof and contain tin in an upper layer in an amount larger than that in a lower layer since the antistatic film forming composite produces a mixture of the volatile indium compound and the nonvolatile tin compound due to vaporization of the organic solvent at the drying step, a ratio of the nonvolatile tin compound is enhanced due to sublimation or vaporization of the volatile indium compound in a surface portion during heating at the calcining step and both the compounds are decomposed. It is generally known that smaller particle sizes enhance mechanical strength of films and smoothness of film surfaces, thereby lowering frictional resistance of the films.

## Examples

Description will be made below of detailed examples which correspond to the embodiment explained above but are not limitative of the present invention.

(Example 1)

After weighing 45 g of indium nitrate (Formula 3) into an Erlenmeyer flask of 1 liter and adding 50 g of acetylacetone to indium nitrate, the materials were mixed at room temperature for dissolution. 5.4 g of stannous oxalate (Formula 4) [10 mol% at (Equation 1)] and methanol were added to the solution thus obtained and refluxed. After the reflux, the solution was cooled to the vicinity of room temperature, an antistatic film forming composite was synthesized by adding acetone to the solution, and stirring and mixing the materials. A soda lime glass substrate (470 mm × 350 mm × 3 mm thick) was dip-coated with the antistatic film forming composite at a withdrawing speed of 30 cm/min. After being left standing at room temperature for five minutes, the substrate was dried at 60°C for five minutes and then calcined at 500°C for one hour.

$$In(NO_3)_3 \cdot 3H_2O \qquad \text{[Formula 3]}$$

$$Sn/(In + Sn) \times 100 \qquad \text{[EQUATION 1]}$$

$$SnC_2O_4 \qquad \text{[Formula 4]}$$

(Example 2)

After weighing 9 g of indium nitrate (Formula 3) into an Erlenmeyer flask of 200 milliliters and adding 8 g of diethylene glycol to indium nitrate, the materials were mixed at room temperature for dissolution. 5.4 g of stannous oxalate (Formula 4) [10 mol% at (Equation 1)] and methoxyethanol were added to the solution thus obtained and refluxed. After the reflux, the solution was cooled to the vicinity of room temperature, thereby synthesizing an antistatic film forming composite. A soda lime glass substrate was spin-coated with the antistatic film forming composite. After being left standing at room temperature for five minutes, the substrate was dried at 60°C for five minutes and then calcined at 400°C for one hour.

Further, 10 g of tetraethoxysilane (Formula 5) was weighed into an Erlenmeyer flask of 200 milliliters and mixed with 500 milliliters of dehydrated ethanol at room temperature for dissolution. An organic solution containing a condensate of organic silicon compound was synthesized by diluting 1 g of concentrated hydrochloric acid which was diluted to a 1/10 concentration with 9 milliliters of dehydrated ethanol and dipping the diluted hydrochloric acid dipped into the solution obtained above while agitating. A soda lime glass substrate was spin-coated with the organic solution. The substrate was left standing at room temperature for five minutes, dried at 60°C for five minutes and thermally treated at 200°C for 30 minutes.

$$Si(OCH_2CH_3)_4 \qquad \text{[Formula 5]}$$

(Comparative example 1)

A cleaned soda lime glass substrate was spin-coated with an EC coating liquid (prepared by Asahi Glass Co., Ltd.) which consists of a silica zol solution containing silicon halide, silane alkoxide and a conductive substance. The substrate was left standing at room temperature for five minutes, dried at 60°C for five minutes and then calcined at 150°C for 30 minutes.

(Comparative example 2)

An ITO film was formed on a cleaned soda lime glass substrate by the ion-plating method.

Table 1 lists results obtained in the Examples 1 and 2 as well as the Comparative examples 1 and 2. Durabilities were checked by reproducing three hundred thousand copies with a copying machine equipped with an automatic original sheet feeder mechanism at a speed of 46 copies per minute.

[Table 1]

|  | Film thickness (nm) | Resistance of sheet (kΩ/□) | Coefficient of friction | Transmittance (%) | Pencil hardness (H) | Durability |
|---|---|---|---|---|---|---|
| Example 1 | 30 | 18 | 0.1 | 88 | 8H | No problem |
| Example 2 | 50 | 30 | 0.2 | 87 | 9H | No problem |
| Comparative example 1 | 100 | 1 | 0.6 | 89 | 6H | No problem |
| Comparative example 2 | 30 | 0.2 | 0.47 | 88 | 8H | No problem |

As clear from the results listed in Table 1, Examples 1 and 2 have smaller coefficients of friction, higher antistatic functions and higher mechanical strengths of films than those of the Comparative examples 1 and 2, thereby exhibiting excellent characteristics for use as ceiling sheets for copying machines equipped with automatic original sheet feeder mechanisms. Though Examples 1 and 2 have values of resistance of sheet which are larger than those of Comparative examples 1 and 2, values smaller than 1 MΩ/□ can be said as resistance low enough for practical use and differences in values of resistance from Comparative examples 1 and 2 do not result in degradation of antistatic functions for practical use.

In other words, Example 1 or 2 has a coefficient of friction which is small enough to suppress generation of static electricity to a level as low as possible, thereby exhibiting an enhanced antistatic function as a whole though it has rather high electric resistance.

For the present invention, it is possible to use not only tin and indium as the additive and the matrix but also antimony and tin as the additive and the matrix or aluminium and zinc as the additive and the matrix.

Meanwhile the present invention can offer such a sheet enhanced in antistatic function comprising, on a substrate:

a thin tin-doped indium oxide film having a gradient structure in which a tin doping ratio is gradient;
a thin antimony-doped tin oxide film having a gradient structure in which an antimony doping ratio is gradient; or
a thin aluminium-doped zinc oxide film having a gradient structure in which an aluminium doping ratio is gradient.

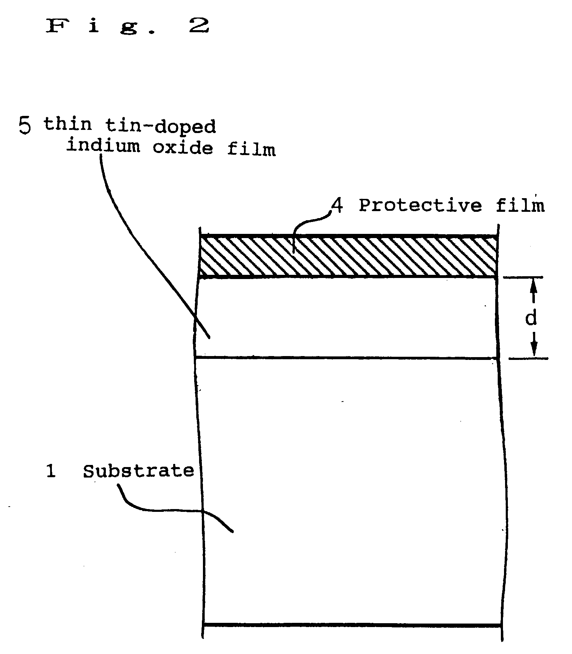

FIG. 2 shows such sectional view of a sheet enhanced in antistatic function. 5 represents the part of gradient structure.

Such gradient structure has similar advantage as the above mentioned embodiments of the present invention.

As clear from the foregoing description, the present invention provides a sheet enhanced in antistatic function which has a small coefficient of friction with no polishing treatment and a favorable antistatic function, and can be manufactured easily and at a low cost, as well as a manufacturing method therefor.

The sheet enhanced in antistatic function according to the present invention is suited for use as a ceiling sheet of a copying machine equipped with an automatic original sheet feeder mechanism to prevent original sheets from jamming due to electrostatic adsorption.

## Claims

1.  A sheet enhanced in antistatic function comprising, on a substrate:

two layers of thin tin-doped indium oxide films to which tin is doped in different amounts;
two layers of thin antimony-doped tin oxide films to which antimony is doped in different amounts; or
two layers of thin aluminium-doped zinc oxide films to which aluminium is doped in different amounts.

2.  A sheet enhanced in antistatic function comprising, on a substrate:

a thin tin-doped indium oxide film having a gradient structure in which a tin doping ratio is gradient;
a thin antimony-doped tin oxide film having a gradient structure in which an antimony doping ratio is gradient; or
a thin aluminium-doped zinc oxide film having a gradient structure in which an aluminium doping ratio is gradient.

3.  A sheet enhanced in antistatic function according to claim 1 or 2,
wherein said sheet comprises a thin film having a principal component of silicon oxide on said thin tin-doped indium oxide film, said thin antimony-doped tin oxide film or said thin aluminium-doped zinc oxide film.

4.  A sheet enhanced in antistatic function according to claim 1,
wherein tin, antimony or aluminium is doped in a larger amount in an upper (surface) layer of said thin tin-doped indium oxide films, said thin antimony-doped tin oxide films or said thin aluminium-doped zinc oxide films than in a lower layer.

5.  A sheet enhanced in antistatic function according to claim 2,
wherein tin, antimony or aluminium is doped at ratios progressively higher from inside toward a surface in said thin tin-doped indium oxide film, said thin antimony-doped tin oxide film or said thin aluminium-doped zinc oxide film.

6.  A sheet enhanced in antistatic function according to any one of claims 1 through 5, wherein a total thickness of said thin film or films does not exceed 80 nm.

7. A sheet enhanced in antistatic function according to any one of claims 1 through 6, wherein said substrate is made of glass.

8. A sheet enhanced in antistatic function according to any one of claims 1 through 7, wherein said sheet is used as a ceiling sheet for copying machines.

9. A manufacturing method for a sheet enhanced in antistatic function comprising:

an antistatic film coating step to coat a substrate with an antistatic film forming composite which contains a volatile indium compound, a nonvolatile tin compound and an organic solvent,
an antistatic film drying step to dry said antistatic film forming composite after said antistatic film coating step; and
an antistatic film calcining step to form an antistatic film by calcining said antistatic film forming composite after said antistatic film drying step.

10. A manufacturing method for a sheet enhanced in antistatic function according to claim 9 comprising, after said antistatic film calcining step:

a step to form a protective film by coating a top surface of said antistatic film with an organic solution containing a condensate of an organic silicon compound which is derived from metal alkoxide, and drying and calcining said organic solution.

11. A manufacturing method for a sheet enhanced in antistatic function according to claim 9 or 10, wherein said nonvolatile tin compound is tin oxalate.

12. A manufacturing method for a sheet enhanced in antistatic function according to any one of claims 9 through 11, wherein said volatile indium compound is a reaction product between indium nitrate or indium chloride and an organic compound of $\beta$-diketone, a polyhydric alcohol or a condensate of a polyhydric alcohol.

F i g .  1

2 Lower layer of thin tin-doped
                    indium oxide film

3 Upper layer of thin tin-doped
                    indium oxide film

4 Protective film

d

1 Substrate

Fig. 2

5 thin tin-doped
  indium oxide film

4 Protective film

d

1  Substrate